# EUROPÄISCHE PATENTSCHRIFT

(11) **EP 0 789 221 B1**
(45) Veröffentlichungstag und Bekanntmachung des Hinweises auf die Patenterteilung: **12.03.2003**
(21) Anmeldenummer: 97100713.3
(22) Anmeldetag: 17.01.1997
(51) Int. Cl.: G01B 5/008, G01B 7/008, B23Q 17/00

(54) **Verfahren und Vorrichtung zur koordinatenmässigen Vermessung von Werkstücken auf Bearbeitungsmaschinen**
Method and device for measuring the coordinates of work pieces on working machines
Méthode et dispositif pour mesurer les coordonnées de pièces usinées sur des machines-outils

(30) Priorität: 07.02.1996 DE 19604354
(43) Veröffentlichungstag der Anmeldung: 13.08.1997
(73) Patentinhaber: Carl Zeiss, 89518 Heidenheim (Brenz) (DE); Carl-Zeiss-Stiftung trading as Carl Zeiss, 89518 Heidenheim (Brenz) (DE)
(72) Erfinder: Ohnheiser, Rainer, Dr., 73111 Lauterstein (DE)

(56) Entgegenhaltungen:
- EP-A- 0 356 513
- GB-A- 1 353 039
- GB-A- 2 154 163
- US-A- 4 581 808
- US-A- 4 977 512
- US-A- 5 097 632
- US-A- 5 257 460
- US-A- 5 387 061
- US-A- 5 439 431
- PATENT ABSTRACTS OF JAPAN vol. 009, no. 209 (M-407), 27.August 1985 & JP 60 071118 A (MITSUBISHI DENKI KK), 23.April 1985,

## Beschreibung

Die Erfindung betrifft ein Verfahren zur koordinatenmäßigen Vermessung von Werkstücken auf Bearbeitungsmaschinen, bei dem das Werkstück während des Meßvorganges auf der Bearbeitungsmaschine verbleibt, sowie ein kombiniertes Bearbeitungs- und Meßzentrum zur Durchführung dieses Verfahrens.

Es ist bereits bekannt, Werkstücke ohne Umzuspannen auf der zu ihrer Bearbeitung eingesetzten Maschine koordinatenmäßig zu vermessen. Hierzu geht man bisher so vor, daß anstelle des Bearbeitungswerkzeugs ein Tastkopf in die Werkzeugaufnahme der Maschine (Morsekegel) eingesetzt wird. Beim anschließenden Meßvorgang fährt dann die Bearbeitungsmaschine die zu vermessenden Punkte des Werkstücks an und bei Berührung sendet der eingewechselte Taster ein drahtloses Tastsignal an die Steuerung der Maschine, das zum Festhalten der Position der Maschinenschlitten zum Antastzeitpunkt dient. Ein derartiges Verfahren ist beispielsweise in der US-PS 4 328 623, der US-PS 4 437 240 oder der US-PS 4 779 319 beschrieben.

Auf die beschriebene Weise können verschiedenartige Messungen durchgeführt werden. So kann beispielsweise die Oberfläche eines Musterwerkstücks auf der Bearbeitungsmaschine digitalisiert werden, die anschließend dann anhand dieser Daten gesteuert Kopien dieses Werkstücks anfertigt. Oft dient die Vermessung auf Werkzeugmaschinen jedoch auch lediglich dem Ermitteln des sogenannten Nullpunktversatzes mit dem Ziel, das Maschinenkoordinatensystem mit dem Koordinatensystem des u.a. bereits teilweise bearbeiteten Werkstücks in Übereinstimmung zu bringen. Daneben werden auch einzelne Geometrieelemente gemessen wie z.B. der Durchmesser oder Abstand von Bohrungen, direkt nachdem diese eingebracht worden sind.

Auf die beschriebene Weise lassen sich jedoch keine sonderlich genauen Messungen durchführen. Das hat mehrere Gründe. Zum einen ist die Meßunsicherheit natürlich von den für die Positionierung der Schlitten der Maschine verwendeten Meßsystemen abhängig, die in der Regel nicht der gleichen Genauigkeitsklasse angehören wie die in speziellen Koordinatenmeßgeräten eingesetzten Meßsysteme. Zum anderen erfolgt die Führung des Bearbeitungs- oder Meßwerkzeugs in der Bearbeitungsmaschine nicht auf idealen Geraden eines kartesischen Koordinatensystems. Vielmehr ist mit Führungsfehlern zu rechnen sowie mit Verbiegungen des Maschinenaufbaus aufgrund der beim Verschieben der Schlitten verlagerten Massen, der Reaktionskräfte beim Anfahren und Abbremsen etc.. Aus diesem Grunde werden anspruchsvollere Meßaufgaben, bei denen es auf eine höhere Genauigkeit ankommt, nach wie vor auf speziellen Koordinatenmeßgeräten vorgenommen, zu denen das zu vermessende Werkstück transportiert und neu aufgespannt werden muß. Insbesondere, wenn zwischen einzelnen Bearbeitungsvorgängen mehrere Meßvorgänge durchgeführt werden müssen, ist das Ab- und Umspannen des Werkstücks zwischen der Bearbeitungs- und der Meßphase sehr zeitaufwendig.

Zudem ist ein separates Koordinatenmeßgerät, das mit einer eigenen CNC-Steuerung und Antrieben in allen Achsen ausgerüstet ist, auch relativ teuer. Zwar ist auch schon vorgeschlagen worden, auf die Antriebe des Koordinatenmeßgeräts zu verzichten und den Tastkopf bzw. den Meßarm des Koordinatenmeßgeräts mit Hilfe eines einfachen Roboters zu positionieren wie das beispielsweise in der US-PS 4 653 011 beschrieben ist. Damit läßt sich das geschilderte Problem des Umspannens des Werkstücks jedoch nicht lösen.

Das US-Patent 4,581,808 zeigt eine Werkzeugmaschine, mit der Bohrlöcher hergestellt werden können. Neben dem Bearbeitungswerkzeug ist auf der Werkzeugmaschine ein in vertikaler Richtung (z) beweglicher Messarm mit einem hieran befestigten Taster vorgesehen, über den sich der Durchmesser der gefertigten Bohrlöcher bestimmen lässt.

Dazu können einerseits die Antriebe der Werkstückauflage verwendet werden, die die Werkstückauflage in einer horizontalen Ebene (x,y) verschieben können, wobei die Antriebe dann zur Bestimmung der Position der Werkstückauflage und damit auch des Werkstückes verwendet werden. Zur hochgenauen Vermessung des Bohrlochdurchmessers kann außerdem in einer Dimension (x) die Position des Messarms gegenüber der Werkstückauflage über ein Interferometer gemessen werden.

Der vorliegenden Erfindung liegt die Aufgabe zugrunde, Werkstücke in der Bearbeitungsmaschine mit möglichst hoher Genauigkeit koordinatenmäßig zu vermessen. Diese Aufgabe wird gelöst durch ein Verfahren mit den im Anspruch 1 angegebenen Merkmalen bzw. durch ein kombiniertes Bearbeitungs- und Meßzentrum, das gemäß den Merkmalen des Anspruchs 7 ausgebildet ist.

Die Erfindung erlaubt es, das Werkstück auch während der genauen koordinatenmäßigen Vermessung auf der Bearbeitungsmaschine zu belassen. Ein Umspannen zwischen Bearbeitung und Messung ist deshalb nicht erforderlich. Außerdem werden hochgenaue Meßergebnisse erhalten, da nicht die Führungen und Meßsysteme der Bearbeitungsmaschine, sondern die eines speziell für Meßzwecke konzipierten und konstruierten Koordinatenmeßgerätes für den Meßvorgang eingesetzt werden.

Zweckmäßig wird das Koordinatenmeßgerät so neben bzw. an der Bearbeitungsmaschine angeordnet, daß der Meßarm des Koordinatenmeßgeräts in den Bearbeitungsraum der Bearbeitungsmaschine zumindest teilweise eintauchen kann. Dabei kann es aus Gründen der besseren Zugänglichkeit in der Bearbeitungsphase zweckmäßig sein, wenn das Koordinatenmeßgerät insgesamt oder Teile des Koordinatenmeßgeräts für den Meßvorgang in Richtung auf den Bearbeitungsraum der Bearbeitungsmaschine bewegbar beispielsweise verschiebbar oder verschwenkbar sind derart, daß der Meßbereich des Meßarms des Koordinatenmeßgeräts nach dem Verschieben bzw. Verschwenken in den Bearbeitungsraum der Bearbeitungsmaschine eintaucht. Während der eigentlichen Bearbeitungsphase, wenn spanende Werkzeuge im Einsatz sind, ist das Meßgerät hingegen zurückgezogen bzw. an den Rand des Bearbeitungsraumes geschwenkt, um den Fertigungsvorgang nicht zu behindern.

Das Koordinatenmeßgerät kann sowohl ein manuelles Gerät sein, dessen Meßschlitten von einer Bedienperson bewegt werden, oder auch ein CNC-gesteuertes Gerät mit eigenen motorischen Antrieben. Allerdings ist auch für eine automatische Vermessung des Werkstücks auf der Bearbeitungsmaschine es nicht unbedingt erforderlich, ein vollmotorisiertes, CNC-gesteuertes Koordinatenmeßgerät einzusetzen. Vielmehr kann in einer besonders vorteilhaften Ausführungsform der Meßarm des Koordinatenmeßgeräts von den Antrieben der Bearbeitungsmaschine bewegt werden, während die Lage des am Meßarm befestigten Tasters durch die Meßsysteme des Koordinatenmeßgeräts erfaßt wird. Hierzu wird der Tastkopf oder der Meßarm des Koordinatenmeßgeräts mit einem beweglichen Teil der Bearbeitungsmaschine, beispielsweise mit der in allen drei Raumrichtungen positionierbaren Spindel, beispielsweise durch eine mechanische, magnetische oder pneumatische Klemmung angekoppelt und kann dann den Tastkopf eines "manuellen" d.h. ansonsten handgeführten Koordinatenmeßgeräts in ihrem Bearbeitungsraum positionieren.

Abhängig von der verwendeten Bearbeitungsmaschine können Koordinatenmeßgeräte unterschiedlicher Bauart mit der Bearbeitungsmaschine zu einem Meßzentrum kombiniert werden. Wenn die Führung des Meßarms des Koordinatenmeßgerätes durch die Bearbeitungsmaschine erfolgt, wird zweckmäßig ein Koordinatenmeßgerät verwendet, dessen Meßarm möglichst leichtgängig in den drei Raumrichtungen zu verschieben ist und der möglichst gut in den Bearbeitungsraum eintauchen kann. Für diesen Zweck eignen sich besonders Koordinatenmeßgeräte in Ständerbauweise mit einem horizontal geführten Meßarm oder Gelenkarmgeräte wie z.B. das in der US-PS 5 396 712 beschriebene Gerät.

Weitere Vorteile der Erfindung ergeben sich aus der nachfolgenden Beschreibung von Ausführungsbeispielen anhand der Figuren 1-3 der beigefügten Zeichnungen.
- Figur 1: ist eine vereinfachte Prinzipskizze, die ein erstes Ausführungsbeispiel für ein kombiniertes Bearbeitungs- und Meßzentrum für Werkstücke zeigt;
- Figur 2: ist ein Blockschaltbild; das die Positionierung des Tastkopfs (15) des Geräts aus Figur 1 mit Hilfe der Antriebe der Bearbeitungsmaschine verdeutlicht;
- Figur 3: stellt eine vereinfachte Skizze eines zweiten Ausführungsbeispiels für ein kombiniertes Bearbeitungs- und Meßzentrum gemäß der vorliegenden Erfindung dar.

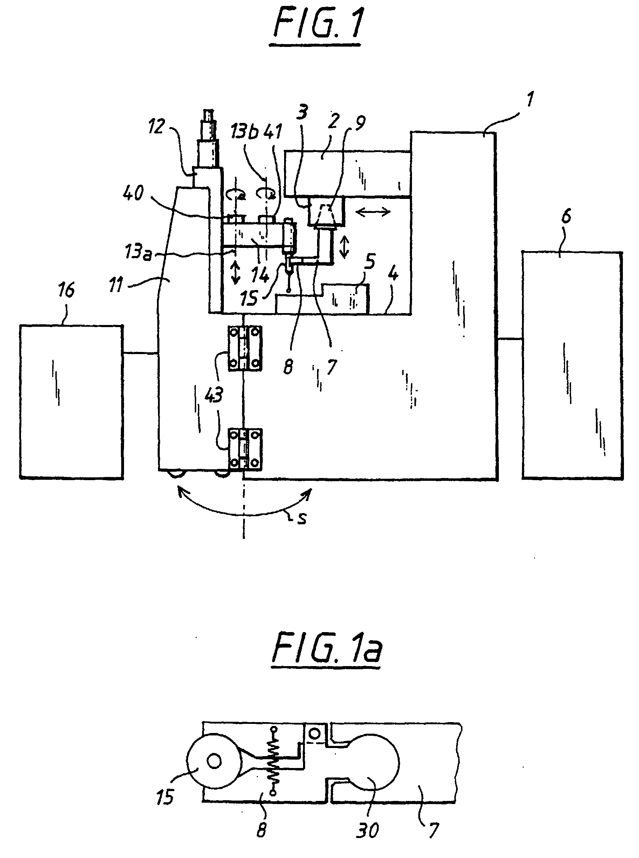

Das in Figur 1 dargestellte kombinierte Bearbeitungs- und Meßzentrum besteht aus einer Werkzeugmaschine (1) sowie einem Koordinatenmeßgerät (11), die beide miteinander über einen Schwenkmechanismus (43) miteinander verbunden sind. Während der hier nicht dargestellten Bearbeitungsphase ist das Koordinatenmeßgerät (11) aus der gezeichneten Stellung um etwa 180° geschwenkt neben der Werkzeugmaschine (1) aufgestellt und behindert dadurch die Zugänglichkeit des Bearbeitungsraumes bei der spanenden Bearbeitung des Werkstücks (5) nicht. Nur für den eigentlichen Meßvorgang wird das Koordinatenmeßgerät (11) in die gezeichnete Stellung geschwenkt und dort an der Bearbeitungsmaschine (1) arretiert, um einen eindeutigen stabilen Bezug zwischen der Werkzeugmaschine und dem Koordinatenmeßgerät herzustellen.

Die Werkzeugmaschine (1) besitzt eine über die beiden Schlitten (2) und (3) in allen drei Raumrichtungen positionierbare Spindel, in deren Aufnahme normalerweise Werkzeuge zur Bearbeitung des auf ihrem Tisch (4) gespannten Werkstücks (5) eingesetzt sind. Mit (6) ist die CNC-Steuerung der Werkzeugmaschine (1) bezeichnet.

Das Koordinatenmeßgerät (11) ist eines vom sogenannten Gelenkarmtyp wie es in der US-PS 5 396 712 beschrieben ist. Es besitzt einen vertikal über eine Nachlaufsteuerung entlang einer Führung (12) verfahrbaren Meßarm (14), der als Gelenkarm aufgebaut ist. Dieser Gelenkarm (14) besitzt zwei parallele Gelenkachsen (13a) und (13b), über die sich der Meßarm (14) mehrfach knicken läßt. Der Drehwinkel der Gelenke wird über zwei Encoder (40) und (41) erfaßt, die den Gelenkachsen (13a) und (13b) zugeordnet sind. An seinem der Bearbeitungsmaschine (1) zugewandten Ende besitzt der Meßarm (14) des Koordinatenmeßgeräts einen elektronischen, messenden Tastkopf (15), mit dessen Tastkugel die Werkstückoberfläche angetastet werden kann.

Mit (16) ist die Auswerteeinheit des Koordinatenmeßgeräts, d.h. die Elektronik samt dem Computer des Geräts bezeichnet.

Geführt wird der Tastkopf (15) des Koordinatenmeßgeräts auf der für das Meßprogramm vorgesehenen Bahn über die in der Werkzeugmaschine (1) vorhandenen Antriebe. Hierzu ist anstelle des Bearbeitungswerkzeugs in die Werkzeugaufnahme eine Vorrichtung eingewechselt, die den Tastkopf (15) mit der Werkzeugspindel koppelt bzw. verbindet. Diese Vorrichtung kann z.B. aus einem Morsekonus (9) bestehen sowie einem winkligen Verbindungsstück (7), an dessen Ende eine federnde Klemme (8) angesetzt ist, die den zylindrischen Teil des Tastkopfs (15) teilweise umfaßt. Diese Klemme ist in Aufsicht etwas detaillierter in Figur 1a dargestellt. Zur Vermeidung von Zwangskräften zwischen dem Arm (7) und dem Tastkopf (15) ist die eigentliche Klemme (8) bezüglich Kippbewegungen über ein Kugelgelenk vom Arm (7) entkoppelt.

Die als "Mitnehmer" wirkende Verbindungseinrichtung (7/8/9) kann beispielsweise auch automatisch über das hier nicht dargestellte Werkzeugmagazin der Bearbeitungsmaschine (1) ein- und ausgewechselt werden.

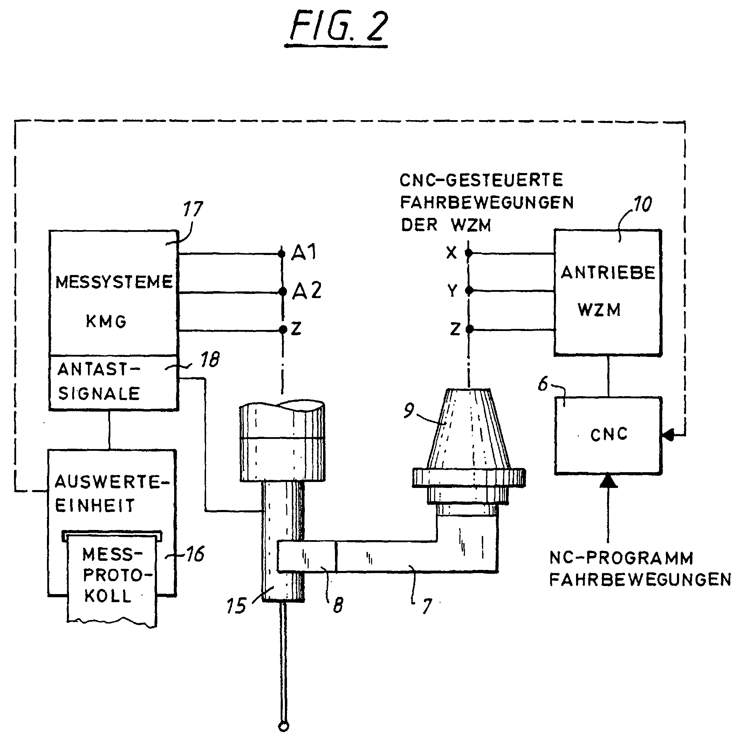

Wie im Blockschaltbild nach Figur 2 skizziert kann nun der Tastkopf (15) des Koordinatenmeßgeräts (11) über den "Mitnehmer" CNC-gesteuert von den Antrieben (10) der Werkzeugmaschine im Zuge des vorgesehenen Meßprogramms positioniert werden. Die genauen Koordinatenmeßwerte generiert jedoch das Koordinatenmeßgerät (11), da die Position des Tastkopfs (15) von den Meßsystemen (17) des Koordinatenmeßgeräts ermittelt wird. Im vorliegenden Falle werden hierzu die Winkelstellungen (A1) und (A2) der Gelenke (13a,13b) des Meßarms (14) und die z-Koordinate des Meßarms (14) zu dem Zeitpunkt, zu dem das im Tastkopf (15) generierte Antastsignal auftritt, an die Auswerteeinheiten (16) des Koordinatenmeßgeräts weitergeleitet, wo das Meßprotokoll erstellt wird. Die Meßergebnisse können außerdem wie durch die gestrichelte Linie angedeutet ist in die CNC-Steuerung der Werkzeugmaschine (1) zurückgekoppelt werden, beispielsweise um das Werkstückkoordinatensystem mit dem Maschinenkoordinatensystem der Werkzeugmaschine (1) in Übereinstimmung zu bringen.

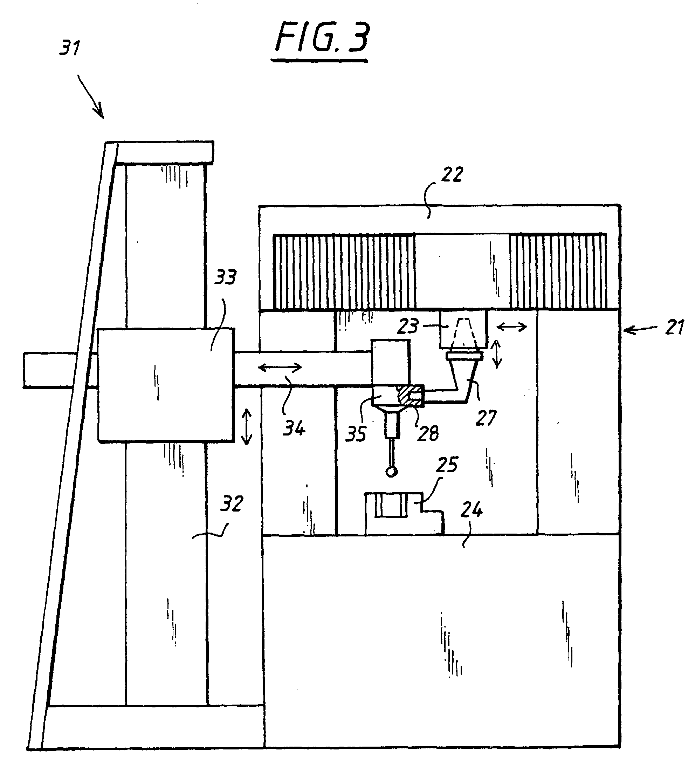

Im Ausführungsbeispiel nach Figur 3 ist die dort mit (21) bezeichnete Werkzeugmaschine in einer gegenüber Figur 1 um 90° gedrehten Stellung gezeichnet. Ansonsten sind gleiche Teile gegenüber Figur 1 mit einer um 20 höheren Bezugsziffer versehen und werden an dieser Stelle nicht noch einmal erläutert.

Kombiniert ist die Werkzeugmaschine (21) in diesem Falle mit einem Koordinatenmeßgerät vom Ständertyp, bei dem ein in der waagerechten x-Koordinate verschiebbarer Meßarm (34) in einem höhenverschiebbaren Kreuzschieber (33) gelagert ist. Die vertikale Führungssäule (32) ihrerseits ist senkrecht zur Papierebene auf einer nicht näher bezeichneten Basisplatte verschiebbar gelagert. Allen Meßschlitten sind photoelektrisch abtastbare Gittermaßstäbe zugeordnet, mit denen die Position des am Meßarm (34) befestigten Tastkopfs (35) hochgenau erfaßt werden kann.

Auch im vorliegenden Falle ist der Tastkopf (35) über einen Mitnehmer (27) mit der Werkzeugaufnahme in der Spindel der Werkzeugmaschine (21) verbunden und kann somit von den Antrieben der Werkzeugmaschine (21) im Bearbeitungsraum der Werkzeugmaschine zwecks Vermessung des auf ihrem Tisch (24) aufgespannten Werkstücks (25) entsprechend dem gewählten Meßprogramm positioniert werden. Zur Kopplung des Mitnehmers (27) an den Tastkopf (35) ist eine elektromagnetische Kopplungs- bzw. Haltevorrichtung (28) vorgesehen, wie sie beispielsweise in der europäischen Patentschrift 128 464 bzw. dem US-Patent 4 637 119 für das Halten von auswechselbaren Taststiften beschrieben ist. Diese Wechselhalterung erlaubt es, die Haltekraft eines Permanentmagneten maschinengesteuert über einen gegenpolig erregbaren Elektromagneten ein- und auszuschalten. Auf diese Weise kann folgender Betrieb realisiert werden: Während eines Bearbeitungsvorganges ist der Meßarm (34) des Koordinatenmeßgeräts (31) vollständig aus dem Bearbeitungsraum der Werkzeugmaschine (21) herausgeschoben, so daß das neben der Werkzeugmaschine (21) aufgestellte Koordinatenmeßgerät (31) die spanende Bearbeitung des Werkstücks (25) nicht stört. Für den daran anschließenden Meßvorgang wird der Mitnehmer (27) entweder manuell oder automatisch aus dem Werkzeugmagazin der Werkzeugmaschine (21) eingewechselt. Danach wird die Werkzeugspindel (23) an den Rand des Bearbeitungsraumes in Richtung auf den Tastkopf (35) verfahren, und der Mitnehmer (27) mit der Haltevorrichtung (28) am Tastkopf (35) durch einen entsprechenden Steuerimpuls magnetisch gekoppelt. Anschließend fährt die Spindel (23) zum Werkstück (25) zurück und zieht hierbei den Meßarm (34) des Koordinatenmeßgeräts (31) und den Tastkopf (35) mit, wobei dessen Position gleichzeitig hochgenau durch die den Schlitten (32-34) des Koordinatenmeßgeräts (31) zugeordneten Meßsysteme erfaßt wird.

Der Tastkopf (35) kann entweder ein schaltender Tastkopf oder auch ein sogenannter messender Tastkopf sein, mit dem die Konturen von Werkstückoberflächen kontinuierlich im dauernden Kontakt zwischen der Tastkugel und der Werkstückoberfläche abgetastet wird.

Im übrigen ist es auch möglich, an dieser Stelle statt eines mechanisch berührenden Tastkopfes einen berührungslosen z.B. optischen Sensor wie beispielsweise einen Triangulationstaster oder eine Videokamera am Meßarm (34) des Koordinatenmeßgerätes (31) anzuordnen.

Gleichfalls zweckmäßig kann es unter Umständen sein, den Tastkopf (35) nicht direkt an dem Meßarm, sondern mittelbar über eine Verlängerung an den Meßarm (34) anzusetzen, um damit den Meßbereich des Koordinatenmeßgeräts zusätzlich in Richtung auf den Bearbeitungsraum der Werkzeugmaschine (21) zu verlagern.

Außerdem muß das Koordinatenmeßgerät nicht dauernd fest an der Werkzeugmaschine angebracht sein. Vielmehr kann es auch für einzelne Meßvorgänge zur Werkzeugmaschine gebracht werden und dort z.B. über eine reproduzierbare Andockstelle mit der Werkzeugmaschine gekoppelt werden. Eine solche Andockstelle kann z.B. aus drei konischen Aufnahmen an der Werkzeugmaschine bestehen, in die drei am Koordinatenmeßgerät befestigte Kugeln eingreifen. Auf diese Weise ist es auch möglich, das Koordinatenmeßgerät mehrfach zu verwenden, indem mehrere Werkzeugmaschinen mit einer solchen Andockstelle versehen werden, an die das Koordinatenmeßgerät dann jeweils im Bedarfsfalle angesetzt wird. Auch in diesen Fällen kann das Werkstück für den Vorgang der Koordinatenmessung auf der Werkzeugmaschine aufgespannt bleiben.

Schließlich muß der Meßarm des Koordinatenmeßgerätes auch nicht unbedingt von der Werkzeugmaschine bewegt werden. Das Werkstück kann auch dann auf der Werkzeugmaschine verbleiben, wenn das Koordinatenmeßgerät selbst CNC-gesteuert ist und die Messungen "aus eigenem Antrieb" heraus durchführen kann, oder wenn es sich bei dem Koordinatenmeßgerät um ein manuelles Gerät handelt, dessen Meßschlitten von einer Bedienperson bewegt werden.

## Patentansprüche

1. Verfahren zur koordinatenmäßigen Vermessung von Werkstücken auf Bearbeitungsmaschinen, bei dem das Werkstück (5) während des Meßvorganges auf der Bearbeitungsmaschine (1,21) verbleibt und dort vom Meßarm (14,34) eines neben der Bearbeitungsmaschine aufgestellten oder an dieser angeordneten Koordinatenmeßgerätes (11,31) abgetastet wird, welches eigene Meßsysteme zur Erfassung der Bewegung seines Meßarms (14,34) bzw. des an ihm befestigten Tasters (15,35) in dem drei Dimensionen besitzt.

2. Verfahren nach Anspruch 1, wobei der Meßarm (34) des Koordinatenmeßgeräts in den Bearbeitungsraum der Bearbeitungsmaschine (21) einfahrbar ist.

3. Verfahren nach Anspruch 1, wobei das Koordinatenmeßgerät (11) für den Meßvorgang in Richtung auf den Bearbeitungsraum der Bearbeitungsmaschine (1) bewegbar ist.

4. Verfahren nach einem der Ansprüche 1-3, wobei der Meßarm (14,34) des Koordinatenmeßgeräts von den Antrieben der Bearbeitungsmaschine (1,21) bewegt wird, während die Lage des am Meßarm (14,34) befestigten Tasters (15,35) durch die Meßsysteme (40/41) des Koordinatenmeßgeräts erfaßt wird.

5. Verfahren nach Anspruch 4, wobei der Meßarm (14,34) oder der Tastkopf (15,35) des Koordinatenmeßgeräts (11,31) zur Durchführung des Meßvorganges mit einem beweglichen Teil (7,27) der Bearbeitungsmaschine (1,21) gekoppelt wird.

6. Verfahren nach Anspruch 5, wobei die vom Koordinatenmeßgerät gewonnenen Meßergebnisse auf die Steuerung (6) der Bearbeitungsmaschine (1,21) zurückgekoppelt werden.

7. Kombiniertes Bearbeitungs- und Meßzentrum für Werkstücke, bei dem das Werkstück (5,25) während des Meßvorganges auf dem Werkstücktisch (4,24) der Bearbeitungsmaschine (1,21) bleibt, **dadurch gekennzeichnet, daß** neben oder an dieser Bearbeitungsmaschine (1,21) ein Koordinatenmeßgerät (11,31) angeordnet ist, das eigene Meßsysteme zur Erfassung der Position des an seinen beweglichen Meßarm (14,34) befestigten Tasters (15,35) in dem drei Dimensionen besitzt.

8. Kombiniertes Bearbeitungs- und Meßzentrum nach Anspruch 7 mit einer Kopplungseinrichtung (8,28), die den Tastkopf (15,35) oder den Meßarm (14,34) des Koordinatenmeßgeräts (11,31) mit einem beweglichen Teil (7,17) der Bearbeitungsmaschine (1,21) lösbar verbindet.

9. Kombiniertes Bearbeitungs- und Meßzentrum nach Anspruch 8, wobei die Kopplungseinrichtung (8/28) bzw. der Tastkopf (15,35) eine elektromechanische, eine magnetische oder pneumatische Kupplung enthält, die maschinengesteuert oder manuell aktivierbar ist.

10. Kombiniertes Bearbeitungs- und Meßzentrum nach einem der Ansprüche 7-9, wobei das Koordinatenmeßgerät (11) verschiebbar bzw. schwenkbar bzw andockbar neben bzw. an der Bearbeitungsmaschine (1) angeordnet ist derart, daß der Meßbereich des Meßarms (14) nach dem Verschieben bzw. Verschwenken mindestens teilweise in den Bearbeitungsraum der Bearbeitungsmaschine (1) eintaucht.

11. Kombiniertes Bearbeitungs- und Meßzentrum nach einem der Ansprüche 7-10, wobei das Koordinatenmeßgerät (11) eines vom Gelenkarmtyp ist, dessen Tastkopf (15) um mehrere, hintereinander angeordnete Dreh- bzw. Schwenkgelenke (13a,b) in mindestens zwei Koordinaten frei verschiebbar gelagert ist.

12. Kombiniertes Bearbeitungs- und Meßzentrum nach einem der Ansprüche 7-10, wobei das Koordinatenmeßgerät (21) eines vom Ständertyp ist, dessen Tastkopf (35) an einem waagerecht verschiebbaren Meßarm (34) befestigt ist.

13. Kombiniertes Bearbeitungs- und Meßzentrum nach einem der Ansprüche 7-10, wobei das Koordinatenmeßgerät (21) eines vom Portaltyp ist, dessen Tastkopf an einem vertikal verschiebbaren Meßarm befestigt ist.

## Claims

1. Method for coordinate measurement of workpieces on processing machines, in which the workpiece (5) remains on the processing machine (1, 21) during the measurement process, where it is scanned by the measurement arm (14, 34) of a coordinate measurement device (11, 31) which is installed alongside the processing machine or is arranged on it, and which has its own measurement systems for detecting the movement of its measurement arm (14, 34) and of the probe (15, 35), which is mounted on it, in the three dimensions.

2. Method according to Claim 1, in which the measurement arm (34) of the coordinate measurement device can be moved into the processing area of the processing machine (21).

3. Method according to Claim 1, in which the coordinate measurement device (11) can be moved in the direction of the processing area of the processing machine (1) for the measurement process.

4. Method according to one of Claims 1-3, in which the measurement arm (14, 34) of the coordinate measurement device is moved by the drives of the processing machine (1, 21), while the position of the probe (15, 35), which is mounted on the measurement arm (14, 34), is recorded by the measurement systems (40/41) of the coordinate measurement device.

5. Method according to Claim 4, in which the measurement arm (14, 34) or the probe head (15, 35) of the coordinate measurement device (11, 31) is coupled to a moving part (7, 27) of the processing machine (1, 21) in order to carry out the measurement process.

6. Method according to Claim 5, in which the measurement results which are obtained by the coordinate measurement device are fed back to the controller (6) for the processing machine (1, 21).

7. Combined processing and measurement centre for workpieces, in which the workpiece (5, 25) remains on the workpiece table (4, 24) of the processing machine (1, 21) during the measurement process, **characterized in that** a coordinate measurement device (11, 31) is arranged alongside or on this processing machine (1, 21) and has its own measurement systems for recording the position of the probe (15, 35), which is mounted on its moving measurement arm (14, 34), in the three dimensions.

8. Combined processing and measurement centre according to Claim 7 having a coupling device (8, 28), which detachably connects the probe head (15, 35) or the measurement arm (14, 34) of the coordinate measurement device (11, 31) to a moving part (7, 17) of the processing machine (1, 21).

9. Combined processing and measurement centre according to Claim 8, in which the coupling device (8/28) or the probe head (15, 35) contains an electromechanical, a magnetic or a pneumatic coupling, which can be activated by machine control or manually.

10. Combined processing and measurement centre according to one of Claims 7-9, in which the coordinate measurement device (11) is arranged such that it can be moved, can be pivoted or can be docked alongside or on the processing machine (1), such that the measurement range of the measurement arm (14) at least partially enters the processing area of the processing machine (1) after being moved or pivoted.

11. Combined processing and measurement centre according to one of Claims 7-10, with the coordinate measurement device (11) being of the hinged arm type, whose probe head (15) is mounted such that it can be moved freely in at least two coordinates about a number of rotating or pivoting joints (13a, b) which are arranged one behind the other.

12. Combined processing and measurement centre according to one of Claims 7-10, with the coordinate measurement device (21) being one of the stand type, whose probe head (35) is mounted on a measurement arm (34) which can be moved horizontally.

13. Combined processing and measurement centre according to one of Claims 7-10, in which the coordinate measurement device (21) is one of the gantry type, whose probe head is mounted on a measurement arm which can be moved vertically.

## Revendications

1. Procédé pour la mesure par coordonnées de pièces à usiner sur des machines d'usinage, avec lequel la pièce à usiner (5) demeure sur la machine d'usinage (1, 21) pendant l'opération de mesure et y est palpée par le bras de mesure (14, 34) d'un appareil de mesure de coordonnées (11, 31) installé à côté de la machine d'usinage ou disposé sur celle-ci, lequel possède ses propres systèmes de mesure pour détecter le mouvement dans les trois dimensions de son bras de mesure (14, 34) ou du palpeur (15, 35) qui y est fixé.

2. Procédé selon la revendication 1, avec lequel le bras de mesure (34) de l'appareil de mesure de coordonnées peut pénétrer dans l'espace d'usinage de la machine d'usinage (21).

3. Procédé selon la revendication 1, avec lequel l'appareil de mesure de coordonnées (11) peut se déplacer en direction de l'espace d'usinage de la machine d'usinage (1) pour l'opération de mesure.

4. Procédé selon l'une des revendications 1 à 3, avec lequel le bras de mesure (14, 34) de l'appareil de mesure de coordonnées est entraîné par les mécanismes d'entraînement de la machine d'usinage (1, 21) alors que la position du palpeur (15, 35) fixé au bras de mesure (14, 34) est détectée par les systèmes de mesure (40/41) de l'appareil de mesure de coordonnées.

5. Procédé selon la revendication 4, avec lequel le bras de mesure (14, 34) ou la tête de palpage (15, 35) de l'appareil de mesure de coordonnées (11, 31) est couplé avec un élément mobile (7, 27) de la machine d'usinage (1, 21) pour effectuer l'opération de mesure.

6. Procédé selon la revendication 5, avec lequel les résultats de mesure obtenus par l'appareil de mesure de coordonnées sont renvoyés à la commande (6) de la machine d'usinage (1, 21).

7. Centre combiné d'usinage et de mesure pour pièces à usiner, avec lequel la pièce à usiner (5, 25) demeure sur la table à pièces à usiner (4, 24) de la machine d'usinage (1, 21) pendant l'opération de mesure, **caractérisé en ce qu'**un appareil de mesure de coordonnées (11, 31) est disposé à côté ou sur cette machine d'usinage (1, 21), lequel possède ses propres systèmes de mesure pour détecter la position dans les trois dimensions du palpeur (15, 35) qui est fixé à son bras de mesure mobile (14, 34).

8. Centre combiné d'usinage et de mesure selon la revendication 7, muni d'un dispositif de couplage (8, 28) qui relie de manière détachable la tête de palpage (15, 35) ou le bras de mesure (14, 34) de l'appareil de mesure de coordonnées (11, 31) avec une pièce mobile (7, 17) de la machine d'usinage (1, 21).

9. Centre combiné d'usinage et de mesure selon la revendication 8, avec lequel le dispositif de couplage (8/28) ou la tête de palpage (15, 35) contient un coupleur électromécanique, magnétique ou pneumatique qui peut être activé sur commande de la machine ou manuellement.

10. Centre combiné d'usinage et de mesure selon l'une des revendications 7 à 9, avec lequel l'appareil de mesure de coordonnées (11) est disposé à côté ou sur la machine d'usinage (1) de manière à pouvoir coulisser ou de manière à pouvoir pivoter ou de manière à pouvoir y être amarré de manière à ce que la plage de mesure du bras de mesure (14) pénètre au moins partiellement dans l'espace d'usinage de la machine d'usinage (1) après le coulissement ou le pivotement.

11. Centre combiné d'usinage et de mesure selon l'une des revendications 7 à 10, avec lequel l'appareil de mesure de coordonnées (11) est un modèle à bras articulé dont la tête de palpage (15) est logée de manière à pouvoir coulisser librement dans au moins deux coordonnées autour de plusieurs articulations de rotation ou de pivotement (13a, b) disposées l'une derrière l'autre.

12. Centre combiné d'usinage et de mesure selon l'une des revendications 7 à 10, avec lequel l'appareil de mesure de coordonnées (21) est un modèle à bâti dont la tête de palpage (35) est fixée à un bras de mesure (34) coulissant dans le sens horizontal.

13. Centre combiné d'usinage et de mesure selon l'une des revendications 7 à 10, avec lequel l'appareil de mesure de coordonnées (21) est un modèle à portique dont la tête de palpage est fixée à un bras de mesure coulissant dans le sens vertical.
